# EUROPÄISCHE PATENTSCHRIFT

(11) **EP 1 064 500 B1**
(45) Veröffentlichungstag und Bekanntmachung des Hinweises auf die Patenterteilung: **06.02.2002**
(21) Anmeldenummer: 99924714.1
(22) Anmeldetag: 22.03.1999
(51) Int. Cl.: F23J 15/06, F23J 15/02, F23L 17/00, A21B 1/10, F24D 12/02, F28D 21/00, C09K 5/00, F25B 27/02

(54) **VERFAHREN UND VORRICHTUNG ZUR ABWÄRMENUTZUNG BEI KLEINFEUERUNGSANLAGEN**
METHOD AND DEVICE FOR UTILIZING WASTE HEAT IN SMALL HEATING SYSTEMS
DISPOSITIF ET PROCEDE D'UTILISATION DE LA CHALEUR PERDUE PRODUITE PAR DE PETITES INSTALLATIONS DE CHAUFFE

(30) Priorität: 20.03.1998 DE 19812310
(43) Veröffentlichungstag der Anmeldung: 03.01.2001
(73) Patentinhaber: Dornbrach, Kerstin, 15845 Rangsdorf (DE)
(72) Erfinder: WENDT, Rene, D-16303 Schwedt (DE); WARNATSCH, Torsten, D-15834 Rangsdorf (DE); RÄBIGER, Karsten, D-14621 Schönwalde (DE)
(74) Vertreter: Maikowski, Michael, Dipl.-Ing. Dr.
(86) Internationale Anmeldenummer: DE9900941
(87) Internationale Veröffentlichungsnummer: WO9947856

(56) Entgegenhaltungen:
- EP-A- 0 102 770
- EP-A- 0 321 452
- DE-A- 2 019 279
- DE-A- 3 322 991
- DE-A- 4 123 377
- FR-A- 2 501 832
- FR-A- 2 501 842
- US-A- 4 681 744
- US-A- 5 344 631

## Beschreibung

Die vorliegende Erfindung betrifft ein Verfahren zur Abwärmenutzung bei öl- oder gasbetriebenen Kleinfeuerungsanlagen, insbesondere im Lebensmittelbereich für Backöfen, gemäß dem Oberbegriff des Anspruchs 1 und eine Vorrichtung zur Durchführung des Verfahrens gemäß Anspruch 13.

Die Abwärmenutzung und Abluftreinigung von Öfen als Kleinfeuerungsanlagen wird zunehmend aus Umweltschutzgründen wichtiger. So sind in der Verordnung über Kleinfeuerungsanlagen nach der 1. BImSchV für erdgas- und heizölbetriebene Öfen mit über 50 kW Nennleistung die maximalen Abgasverluste festgeschrieben. Seitens des Gesetzgebers ist ab dem 1. Januar 1998 vorgeschrieben, daß der Abgasverlustwert nur noch maximal 9% mit einer entsprechenden Untersetzung für ältere Anlagen betragen darf. Öfen der vorgestellten Größenordnung kommen vor allem im Lebensmittelbereich zur Anwendung und stellen dort aufgrund ihrer Vielzahl in ihrer Gesamtheit einen wesentlichen Energieverbraucher dar.

Allein in Deutschland gibt es ca. 25.000 Bäckereien, bei welchen der kostenintensivste und umweltbelastendste Faktor der Ofenbetrieb ist. Demzufolge besteht ein Bedarf an Möglichkeiten, die Abwärme der eingangs beschriebenen Kleinfeuerungsanlagen zu nutzen und die Energieverluste weitgehend zu minimieren.

Derzeit ist eine Vorrichtung bekannt, welche unter dem Begriff "Ökoblock" vermarktet wird. Gemäß diesem Stand der Technik wird das Rauchgas, welches in der Brennkammer durch Verbrennen des fossilen Brennstoffes zum Beheizen des Ofenraumes entsteht, in eine Kompakteinheit durch wassergefüllte Kühlschlangen gekühlt und anschließend über eine mit Kalkstein gefüllte Adsorber-Einheit naßchemisch im Gegenstrom gewaschen. Das in den Kühlschlangen erwärmte Wasser wird einer Speichereinheit bzw. einem Boiler zugeführt, wo die Rauchgasabwärme zur Wasseraufbereitung bzw. Raumluftheizung wiedergenutzt wird. Mit der der Rauchgasabwärmenutzung nachgeschalteten naßchemischen Rauchgaswäsche werden bei dem sogenannten Ökoblock speziell schwefelsaure Komponenten, die über die Heizölbefeuerung in den Rauchgasstrom gelangen, an Kalk gebunden. Dabei wird aber Kohlendioxid in Folge der Verdrängungsreaktion aus dem Kalk freisetzt. Eine Bindung von Kohlendioxid beim Ökoblock wäre nur im Falle der Verwendung des teureren Brandkalkes gegeben, wobei hier aber die angesprochene CO₂-Minimierung des Rauchgasstromes auf den Herstellungsprozeß von Brandkalk mit der Freisetzung von CO₂ verlagert wird und damit keinen wirklichen Beitrag zur Senkung des CO₂-Ausstoßes darstellt. Eine tatsächliche Verminderung des CO₂-Ausstoßes ist nur indirekt mit stärkerer Rauchgaswärmenutzung und der damit verbundenen Einsparung von Alternativwärmeträgern, die auf Verbrennungsprozessen beruhen, wobei wiederum CO₂ entsteht, gegeben.

Desweiteren ist an dem Ökoblock des Standes der Technik nachteilig, daß zwar die Rauchgasabwärme rückgewonnen wird, aber eine effektive Nutzung mit der auf die Warmwassererzeugung bzw. Raumheizung ausgerichteten Abwärmeverwertung nicht gegeben ist.

Eine verbesserte Ausnutzung der im Rauchgas einer Kleinfeuerungsanlage vorhandenen Energie ist aus der DE 33 22 991 A1 bekannt. Hierzu wird das Abgas mittels eines Verdichters oder Sauggebläses über mehrere Wärmetauscher geleitet, wodurch die Abgase unter dem Taupunkt abgekühlt und auch diese Energie nutzbar gemacht wird. Um auch die Wärme bei geringen Vorlauftemperaturen zu nutzen, wird vorgeschlagen, diese für eine Fußbodenheizung oder zum Betrieb einer Wärmepumpe einzusetzen.

Aber auch bei dieser Lösung bleibt der allen bisherigen Lösungen innewohnende Nachteil, daß die Rauchgasabwärmenutzung an einen sporadischen, diskontinuierlichen Warmwasserbedarf gebunden ist und die Raumheizung bekanntlich jahreszeitlichen Bedarfsanforderungen unterliegt. So wird beispielsweise im Sommer überschüssige Heizungswärme anfallen, die dann schlußendlich doch an die Umgebung als Abwärme entlassen werden muß.

Ausgehend von diesem Stand der Technik ist es daher Aufgabe der vorliegenden Erfindung ein Verfahren und eine Vorrichtung zur Verfügung zu stellen, welche bei der Nutzung der Abwärme von Kleinfeuerungsanlagen eine Verringerung der saisonalen Schwankungen und somit eine effektive Energienutzung über das gesamte Jahr hinweg ermöglicht.

Verfahrenstechnisch wird die vorliegende Aufgabe durch die Merkmale des Patentanspruchs 1 gelöst.

Vorrichtungstechnisch wird die obige Aufgabe durch die Merkmale des Patentanspruchs 13 gelöst.

Erfindungsgemäß wird das Hoch- oder das Niedertemperatur-Wärmeträgermedium zum Betrieb einer Absorptionskälteanlage eingesetzt.

Zusätzlich zum Betrieb der Absorptionskälteanlage wird die Wärmeenergie auch für andere Anwendungen verwendet, um eine optimale Energieausnutzung zu gewährleisten. Insbesondere steht bei Verwendung des Hochtemperatur-Wärmeträgermediums für den Betrieb der Absorptionskälteanlage das Niedertemperatur-Wärmeträgermedium für andere Anwendungen zur Verfügung und umgekehrt.

So kann das mit einem Teil der Rauchgasenergie beladene Hochtemperatur-Wärmeträgermedium zusätzlich zur Erwärmung von Materialien oberhalb des Siedepunktes von Wasser verwendet und das bzw. die mit einem Teil der Rauchgasenergie beladene(n) Niedertemperatur-Wärmeträgermedium(en) kann bzw. können für Niedertemperaturprozesse in der Backvorbereitung, insbesondere Auftauprozesse oder Heizung des Garraumes sowie für die Erzeugung von Heißwasser verwendet werden.

Bei der Vorrichtung zur Durchführung des erfindungsgemäßen Verfahrens gemäß Anspruch 13 ist eine Absorptionskälteanlage vorgesehen, die mit dem ersten Wärmetauscher oder dem zweiten Wärmetauscher oder einem zusätzlichen in Prozeßrichtung zwischen dem erstem Wärmetauscher und dem zweitem Wärmetauscher angeordneten Wärmetauscher zur Beheizung verbunden ist.

Mit Hilfe der vorliegenden Erfindung ist es möglich, Öfen, beispielsweise im Bäckereiwesen, durch einfache Nachrüstung mit einer Absorptionskälteanlage einen hocheffizienten und geringe saisonale Schwankungen aufweisenden Ofen bereitzustellen, ohne daß ein neuer Ofen angeschafft und installiert werden muß.

Eine Absorptionskälteanlage kann beispielsweise zur Herstellung von Eiswasser, zum Frosten oder zur Raumklimatisierung genutzt werden. Für Absorptionskälteanlagen wird eine stabile Vorlauftemperatur von vorzugsweise 80 bis 180 °C benötigt. Damit eignet sich bei Fehlen von anderen Endverbrauchern für Hochtemperaturanwendungen sowohl die im Hochtemperatur-Wärmeträger gespeicherte Energie als auch z. B. bei einer Verwendung von Wasserdampf oder Wasser unter Druck als Niedertemperatur-Wärmeträger die in diesem gespeicherte Energie zum Betrieb der Kälteanlage. Mit Wasserdampf bzw. Wasser unter Druck als Wärmeträger lassen sich leicht Wärmeträgervorlauftemperaturen im Bereich um 100 °C einstellen.

Die Verwendung der Abwärme zum Betrieb einer Kälteanlage bietet den Vorteil, daß die von dieser benötigten Energiemengen mit den von der erfindungsgemäßen Vorrichtung bereitgestellten korrelieren. Auch handelt es sich um einen saisonal gleichbleibenden bzw. gegebenenfalls in der wärmeren Jahreszeit sogar eher höheren Energiebedarf.

Gerade durch den Einsatz einer Absorptionskälteanlage in Kombination mit anderen Abwärmenutzungen ist eine besondes effiziente Energienutzung möglich, da zum einen mit der Absorptionskälteanlage ein Energieabnehmer zur Verfügung steht, der selbst nur geringen saisonalen Schwankungen unterworfen ist. Zum anderen ergänzen sich die kälteliefernde Absorptionskälteanlage und die obengenannten wärmeliefernden Prozesse im Laufe des Jahres optimal. Im Winter, wenn mehr Wärme für die Heizung und weniger Kälte benötigt wird, verschiebt sich der Anteil der Energieabnahme zugunsten der wärmeliefernden Prozesse. Im Sommer, wenn mehr Kühlenergie und weniger Heizenergie benötigt wird, zugunsten der Absorptionskälteanlage. Dies gilt um so mehr, wenn diese zur Raumklimatisierung eingesetzt wird. Insgesamt ergibt sich über den Lauf des Jahres hinweg eine sehr gute und gleichmäßige Energienutzung der Ofenabgasenergie.

Das Funktionsprinzip einer Absorptionskälteanlage beruht auf der Verwendung eines Kühlmittels, in der Regel Ammoniak oder Lithiumbromid, das in einem Absorptionsmittel, überwiegend Wasser, in einem ersten Behälter absorbiert wird. Mittels einer Pumpe wird das Gemisch in den Desorber gepumpt, wo durch Wärmezufuhr das Kühlmittel aus dem Absorptionsmittel freigesetzt wird. Das Absorptionsmittel wird in den ersten Behälter zurückgeführt, wobei es meist verrieselt wird, um die Absoprtion des Kühlmittels zu verbessern. Das Kühlmittel wird in einem weiteren Behälter, in der Regel durch Kühlwasser oder Kühlluft, kondensiert. Über ein Drosselorgan wird es dann verdampft, wobei im allgemeinen ein Wärmeträger abgekühlt wird. Danach wird auch das Kühlmittel in den ersten Behälter zurückgeführt und wieder in dem Absorptionsmittel absorbiert.

Zweckmäßigerweise kann die Kälteanlage konstruktiv so angepaßt werden, daß der über die heißen Rauchgase erwärmte Hoch- bzw. Niedertemperatur-Wärmeträger die Abwärme direkt dem in die Kälteanlage integrierten Wärmetauscher des Desorbers überträgt. Im allgemeinen ist der Desorber als rohrförmiger Behälter ausgeführt, dessen, wegen der besseren Wärmeübertragung gewellte Außenfläche direkt mit einer integrierten Heizung der Kälteanlage beheizt wird. Erfindungsgemäß ist es bevorzugt, den durch die Rauchgase der Kleinfeuerungsanlage erwärmten Wärmeträger über Rohrleitungen, die zweckmäßig spiralförmig um den Desorber angeordnet sind, auf den Desorber zu übertragen. Vorzugsweise werden die Rohre in den Versteifungen der gewellten Außenfläche angeordnet. Es ist natürlich ebenso denkbar, die heißen Rauchgase direkt zur Beheizung des Desorbers einzusetzen. Sollte der Energieeintrag durch die Abwärme nicht ausreichen, kann durch die integrierte Heizung, z.B. einen Gasbrenner, der Kälteanlage die fehlende Energie zugesetzt werden.

Dabei zeichnet sich die vorliegende Vorrichtung durch eine einfache Handhabung sowie geringe Investitions- und Betriebskosten aus. Besonders vorteilhaft ist, daß die Vorrichtung zur Durchführung des erfindungsgemäßen Verfahrens als kompakte, modulare Baueinheit bereitgestellt werden kann, so daß mit einem baukastenartigen Ausbauprogramm je nach den örtlichen Gegebenheiten entsprechend dem Bedarf und der Leistung der Ofentechnik individuell nachgerüstet werden kann.

Die Unteransprüche stellen bevorzugte Ausführungsformen der vorliegenden Erfindung dar.

In einer Ausführungsform wird bei der Abwärmenutzung durch eine Absorptionskälteanlage das Rauchgas in einem gegebenenfalls zweiten Niedertemperatur-Wärmetauscher auf Temperaturen von 30 bis 70 °C weiter abgekühlt.

Üblicherweise sind moderne Backöfen aus Kostengründen mit Umluftführung und heizöl- oder erdgasbetriebenem Strahlungsbrenner ausgestattet. Die Abluft- bzw. Abgastemperatur am Ofenausgang, insbesondere Backofenausgang, beträgt dabei bis zu 300 °C und einem über den Abgaskamin bestimmten Unterdruck am Ausgang des Backofens von bis zu 1 mbar. Der Abgasvolumenstrom pro Quadratmeter Backfläche liegt durchschnittlich bei 10 m³ Abgas/h.

Entscheidend ist für die vorliegende Erfindung, daß wenigstens zwei Wärmetauscher eingesetzt werden, wobei bei dem ersten Wärmetauscher ein Hochtemperatur-Wärmeträgermedium verwendet wird, und der in Prozeßrichtung nachgeschaltete zweite Wärmetauscher ein Niedertemperatur-Wärmeträgermedium enthält.

Unter Hochtemperatur-Wärmeträgermedium ist hier ein Wärmeträgermedium mit einem Arbeitsbereich von etwa 280 °C bis etwa 20 °C, insbesondere etwa 220 °C bis etwa 20 °C zu verstehen. Als Hochtemperatur-Wärmeträgermedium wird vorteilhaft ein Wärmeträgeröl verwendet, welches auf einem wasserstoffbehandelten Mineralöl mit Additiven, das für einen gelegentlichen unbeabsichtigten Kontakt mit Lebensmitteln zugelassen ist. Ein derartiges Wärmeträgeröl wird beispielsweise unter dem Handelsnamen "Calfo" FG vertrieben und kann auf Vorlauftemperaturen von über 270 °C erwärmt werden.

Für bestimmte Anwendungen kann anstelle eines Thermoöls auch Wasser oder Wasserdampf unter Druck eingesetzt werden. Der Arbeitsbereich ist damit zwar auf maximale Temperaturen um ca. 160 °C eingeschränkt, wodurch sich aber keine Nachteile ergeben, wenn diese Temperaturen für den bestimmten Endverbraucher ausreichen.

Als Niedertemperatur-Wärmeträgermedium wird ein Wärmeträgermedium mit einem Arbeitsbereich von etwa 180 °C bis etwa 10 °C, insbesondere etwa 120 °C bis etwa 10 °C bezeichnet. Vorzugsweise kann Wasser bzw. Wasserdampf, gegebenenfalls unter Druck, als Niedertemperatur-Wärmeträgermedium eingesetzt werden.

Das Wärmeträgermedium, welches aus der zweiten Niedertemperatur-Wärmetauscher-Stufe stammt, weist typischerweise eine Vorlauftemperatur von ca. 90 °C auf, wobei die Vorlauftemperaturen im Bereich von 50 °C bis 100°C einstellbar sind.

Erfindungsgemäß können auch mehrere Wärmetauscher mit Hochtemperatur- oder Niedertemperatur-Wärmeträger vorgesehen sein, die im Bedarfsfalle auch mit unterschiedlichen Wärmeträgermedien arbeiten können. Ebenso ist es möglich sowohl im Hochtemperaturbereich als auch im Niedertemperaturbereich mehrere Wärmetauscher einzusetzen.

Selbstverständlich kann auch in allen Wärmetauschern das gleiche Wärmeträgermedium zum Einsatz kommen. Allerdings wird im Niedertemperaturbereich Wasser wegen der guten Wärmeträgereigenschaften einerseits und seiner Kostengünstigkeit und Ungiftigkeit andererseits bevorzugt.

Besonders vorteilhaft sind die Wärmetauscher als Plattenwärmetauscher ausgebildet. Alternativ eignen sich Ringkanalwärmetauscher, die in ihrer geometrischen Form besonders gut an Abgasrohre angepaßt sind. In einer bevorzugten Ausführungsform wird der Wärmetauscher als Kompakteinheit aus zwei hintereinander geschalteten, separat mit Wärmeträgermedium füllbaren Wärmetauschern ausgebildet, um eine effektive und Endverbraucher-orientierte Wärmebereitstellung über den Wärmeträger zu sichern. So können beispielsweise ständige Endverbraucher, die parallel zum Prozeß, etwa dem Backprozeß, betrieben werden, mit der beim Backprozeß anfallenden Abwärme beheizt werden.

Im ersten Wärmetauscher wird erfindungsgemäß ein Hochtemperatur-Wärmeträger, typischerweise ein Thermoöl durch die Rauchgase erwärmt. Dieses kann vorteilhaft in sogenannten Thermoöl-Öfen direkt für den Backprozeß genutzt werden. Diese Nutzung erweist sich als besonders vorteilhaft, da sie zeitlich mit dem Anfall der größten Abwärmemenge koinzidiert. Bei üblichen Backtemperaturen werden Rauchgastemperaturen von durchschnittlich etwa 220 bis 250 °C erreicht. Daraus resultieren typische Vorlauftemperaturen des Hochtemperatur-Wärmeträgers von ca. 140 bis 160 °C.

Weiter ist beim industriellen Backen und/oder Kochen z. B. der Betrieb von normalerweise mit Gas oder elektrisch beheizten Kochern oder Fettbackgeräten mit der Abwärme des Rauchgases denkbar. Derartige Fettbackgeräte weisen Betriebstemperaturen von 200 °C bis 250 °C auf. Im Stand der Technik wurden derartige Fettbackgeräte bislang im wesentlichen elektrisch beheizt.

Die abgestufte Wärmeentnahme gemäß der vorliegenden Erfindung führt bei einer Abgastemperatur von 300 °C zu einem Hochtemperatur-Wärmeträgermedium mit einer Vorlauftemperatur von ca. 230 °C bis 290 °C. Dieses Hochtemperatur-Wärmeträgermedium kann beispielsweise über Spiralen mit dem zu erhitzenden Fett in Kontakt gebracht werden und dieses auf die benötigte Betriebstemperatur von ca. 200 °C bis 254 °C bringen.

In einer besonders bevorzugten Ausführungsform wird die in dem Hochtemperatur-Wärmeträgermedium gespeicherte Rauchgasenergie zum Betrieb von einem oder mehreren Thermoöl-Öfen eingesetzt und die in dem Niedertemperatur-Wärmeträgermedium gespeicherte Energie zum Betrieb einer Absorptionskälteanlage genutzt. Die Rauchgase werden hierbei im zweiten Wärmetauscher auf Temperaturen über ihrem Taupunkt, typischerweise ca. 70 bis 90 °C je nach Brennstoff, abgekühlt. Auch bei dieser Ausführungsform wird eine für die Ableitung ohne einen Kamin ausreichende Abkühlung der Rauchgase sichergestellt. Erfindungsgemäß wird lediglich eine Abgasleitung benötigt.

Eine weitere kontinuierlich benötigte Energieentnahmestelle für die im Niedertemperaturbereich rückgewonnene Abwärme stellt beispielsweise auch die Beheizung eines Garraumes auf Temperaturen von 50 bis 80 °C, insbesondere ca. 64 °C bis 80 °C dar. Weitere Anwendungsmöglichkeiten für die aus der zweiten Wärmetauscherstufe erhaltene Abwärme liegen beispielsweise in der Beheizung von Auftauräumen.

Selbstverständlich kann die Abwärme bei Bedarf auch zu Heizzwecken verwendet werden, wobei vorteilhafterweise der Rücklauf der Endverbraucher hierfür einer weiteren energetischen Nutzung zugeführt wird.

Beide Wärmeträgermedien können vorteilhaft mit eigenständigen Boilersystemen verbunden werden, wobei der Boiler für das Hochtemperatur-Wärmeträgermedium zweckmäßigerweise mit einem geringen Überdruck betrieben wird, um Verlusten an Wärmeträgeröl in Folge des Dampfdruckes entgegenzutreten.

Alternativ können an den bzw. die separaten Boiler verschiedene Abnehmer angeschlossen werden. Die erfindungsgemäße Vorrichtung erweitert in dieser Hinsicht die Möglichkeiten der Abwärmenutzung enorm und erlaubt eine weitgehend individuelle Anpassung an den jeweiligen Bedarf und natürlich die zur Verfügung stehende Abwärme der Kleinfeuerungsanlage. Dabei werden durch die bevorzugte modulare Bauweise die Kosten dennoch sehr gering gehalten.

Das erfindungsgemäße Verfahren erzielt eine deutliche Absenkung des Abgasverlustwertes weit unterhalb der gesetzlich festgeschriebenen Grenzwerte, wobei die gewonnene Abwärme effektiv mit der Zuführung, z. B. in den Backvorbereitungsprozeß, verwertet und genutzt wird. Der Wirkungsgrad wird durch die Abgastemperatur bestimmt und liegt bei mindestens 80 %, insbesondere bei ca. 85% bzw. für Öfen mit einer Leistung von 50 kW bei einer nutzbaren Wärmemenge von ca. 7 kW.

Die Leistung der verwendeten Einzelverbraucher wie z. B. Umwälzpumpen, Saug-Zug-Gebläse, sowie Steuerungssystem, liegt im Verbrauch für Öfen mit einer Leistung von ca. 50 kW bei maximal 1,3 kW, ist also sehr gering.

Besonders vorteilhaft ist die Möglichkeit, das gegebenenfalls abgekühlte Rauchgas einer Reinigungsstufe zuzuführen. Die Rauchgasreinigung geschieht erfindungsgemäß mittels eines Adsorbers, insbesondere eines Trockenbett-Adsorbers, der als Festbett-Adsorber ausgebildet ist und mit einer körnigen Kalk/Kohle-Schüttung mit Korngrößen von 5-10 mm gefüllt ist. Der Kohleanteil beträgt vorzugsweise 10%. Dieser Adsorber bindet die sauren Bestandteile, die mit dem Heizöl bzw. Erdgas in den Rauchgasstrom eingetragen werden, an Kalk und desweiteren bewirkt die adsorptive Wirkung der Kohle einen weiteren Abbau der Immissionskomponenten.

Alternativ kann auch ein Trockenbettadsorber auf Silikagelbasis eingesetzt werden. Dieser kann wegen der besseren Temperaturverträglichkeit auch unmittelbar an den Ofenausgang angeschlossen werden, wodurch die Materialanforderungen an die Wärmetauscher geringer werden. Die Entsorgung verbrauchter Adsorbenzien ist problemlos in Müllverbrennungsanlagen gegeben.

Im eingangs dargestellten Stand der Technik, dem sogenannten Ökoblock, wird eine Abwärmenutzung mit nachgeschalteter naßchemischer Rauchgasreinigung eingesetzt. Die naßchemische Rauchgasreinigung erfolgt im Gegenstrom, wobei das Rauchgas über eine mit Wasser berieselte Kalkstein-Schüttung geführt wird. Diese naßchemische Rauchgasreinigung des Standes der Technik führt einerseits zu einem zusätzlichen Wasserbedarf sowie zu einer zusätzlichen Abwassereinleitung, wobei die ausgewaschenen bzw. chemisch gebundenen Rauchgaskomponenten ins Abwasser gelangen.

Demgegenüber erfordert der Trockenbett-Adsorber der vorliegenden Erfindung weder einen zusätzlichen Wasserbedarf noch eine zusätzliche Abwassereinleitung. Darüberhinaus ist er effektiver, da bei der Kalk/Kohle-Schüttung die Vorteile der chemischen Umsetzung der sauren Bestandteile mit den rein adsorptiven Eigenschaften der Kohle vereint werden bzw. bei der Silikagel-Schüttung die große Adsorptionsfähigkeit des Silikagel genutzt wird.

Die Auslegungsstandzeiten der Adsorber liegen typischerweise mindestens bei einem Betriebsjahr. Dabei werden in der Regel bei einer Kleinfeureungsanlage mit einer Leistung von 50 kW ca. 20 bis 100 l Raum benötigt. Die Leistungsaufnahme der erfindungsgemäßen Vorrichtung wird im wesentlichen durch den Strömungswiderstand der Adsorbereinheit bestimmt.

Weitere Vorteile und Merkmale der vorliegenden Erfindung ergeben sich aufgrund der Beschreibung und Ausführungsbeispiele, sowie anhand der Zeichnungen.

Es zeigen:
Fig. 1 eine schematische Darstellung des erfindungsgemäßen Verfahrens und
Fig. 2 eine schematische Darstellung einer weiteren erfindungsgemäßen Vorrichtung.

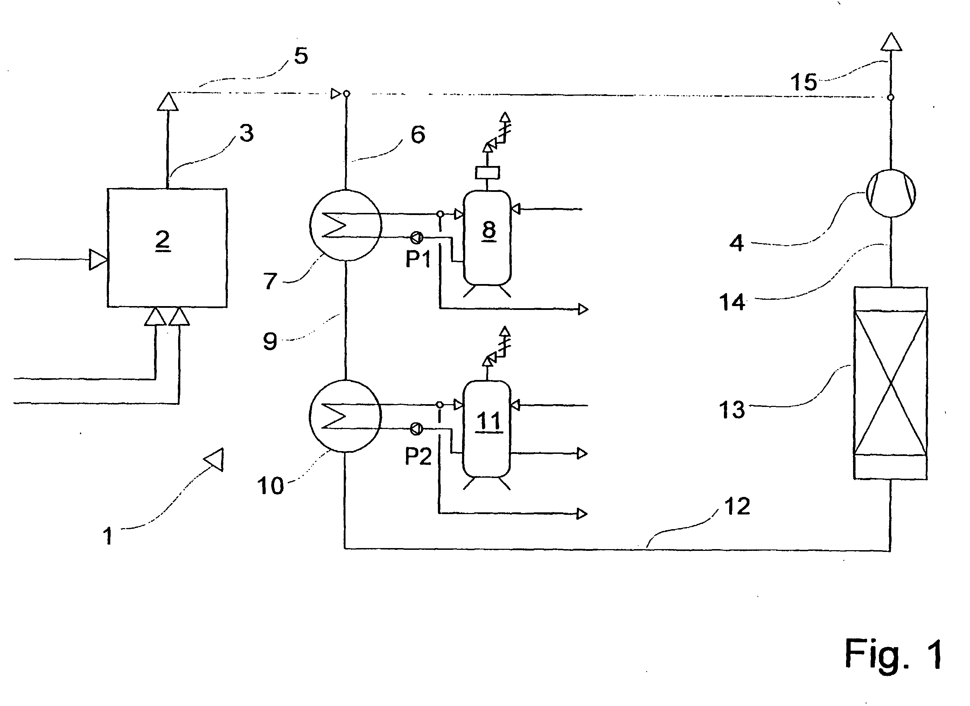

In Fig. 1 ist mit 1 ein Schema bezeichnet, welches die Verfahrensschritte der vorliegenden Erfindung sowie die Vorrichtung zur Durchführung des erfindungsgemäßen Verfahrens veranschaulicht.

Für die Zwecke des vorliegenden Beispiels soll eine Abwärmenutzung mit anschließender Abgasreinigung am Beispiel eines ölbeheizten Backofens einer Bäckerei beschrieben werden.

Es handelt sich um einen Backofen, der bereits mit Umluftführung betrieben wird, d. h. daß die durch die Verbrennung des Heizöls entstehenden Rauchgase wieder in den Brennerraum zurückgeführt werden, um einerseits die mehr oder weniger fokussierte Heizleistung der heute eingesetzten Strahlungsbrenner gleichmäßig zu verteilen und, bevor die Heißluft als Abluft mit ca. 250 ° bis 300 °C aus dem Backofen abgezogen wird, die enthaltene Energie nutzbar zu machen. Über die sogenannte Hysterese des Brenners wird die erzeugte Heißluft bzw. die Backofentemperatur geregelt.

Im Beispielsfalle kam als Backofen 2 ein Ofen des Typs MIWE mit Strahlungsbrenner und einer Gesamtheizleistung von 55 kW zur Anwendung, dessen Abgas nach dem erfindungsgemäßen Verfahren einer Abwärmenutzung und der Abluftreinigung unterworfen wurde.

Die Abgastemperatur betrug am Ofenausgang 3 ca. 300 °C, die Abgasmenge lag bei ca. 90 kg/h bei einer maximal verfügbaren Abgaswärmemenge von ca. 8,5 kW. Der rechnerisch ermittelte Abgasverlustwert betrug 13%.

Mittels des Saug-Zug-Gebläses 4 wurde das Abgas am Ausgang 3 des Backofens 2 druckgeregelt abgezogen, wobei der Unterdruck am Ofenausgang 3 bei 0,2 bis 0,4 mbar lag und in etwa dem Zug der Kaminwirkung entsprach, um negative Auswirkungen auf den Backprozeß, z. B. durch Absaugen größerer Abgasmengen auszuschließen.

Über die Rohrleitungen 5 und 6 gelangen die heißen Rauchgase zu einem ersten Wärmetauscher 7, der mit einem Wärmeträgeröl des Typs "Calfo" FG als Hochtemperatur-Wärmeträgermedium gefüllt ist, welches auf Vorlauftemperaturen bis über 270 °C für die in Fig. 1 nicht gezeigten temperaturintensiven Endverbraucher erwärmt wurde und mit einer Wärmemenge von 2 kW die stationäre Temperaturführung dieser Endverbraucher sichert.

Als Endverbraucher werden im Beispielsfalle des Bäckereibetriebes Fettbackgeräte an den Hochtemperatur-Wärmeträgermedium-Vorlauf aus Boiler 8 angeschlossen. Diese Fettbackgeräte weisen Spiralen auf, durch die das erhitzte Hochtemperatur-Wärmeträgermedium fließt und seine Wärme an das Fett abgibt und dieses somit auf Temperaturen zwischen ca. 200 °C und 250 °C hält.

Aus dem ersten Wärmetauscher 7 strömt das auf ca. 230 °C vorgekühlte Rauchgas über Leitung 9 in den zweiten mit einem Niedertemperatur-Wärmeträgermedium, im Beispielsfalle Wasser, gefüllten zweiten Wärmetauscher 10 und wird in dieser zweiten Stufe auf eine Austrittstemperatur von unter 50 °C gekühlt.

Das Niedertemperatur-Wärmeträgermedium der zweiten Stufe erreicht Vorlauftemperaturen von 90 °C, die dem Boiler 11 entnommen werden können. Beispielsweise kann der Heißwasservorlauf zu Auftau- oder zu Heizzwecken verwendet werden oder eine Kälteanlage nachgeschaltet werden. Für Raumheizung oder Warmwasserbereitung kann auch der Rücklauf von den Endverbrauchern genutzt werden.

Das Wärmeträgermedium in beiden Wärmetauschern wird über Umwälzpumpen P1 und P2 im Kreislauf geführt. Die Boiler 8 und 11 sind wärmegedämmt und der Hochtemperaturboiler 8 ist über ein Ausgleichsgefäß und Ventilsystem mit der Atmosphäre verbunden, wobei es sich hier lediglich um eine Sicherheitsmaßnahme handelt, da das Hochtemperatur-Wärmeträgermedium mit einem Überdruck von bis zu ca. 0,5 bar betrieben wird, um dem Dampfdruck des Wärmeträgeröls und den damit verbundenen Verlusten an Wärmeträgeröl zu begegnen.

Eine weitere sinnvolle Verwendung des Hochtemperatur-Wärmeträgermedium-Vorlaufes liegt in der allgemeinen Versorgung von temperaturintensiven Endverbrauchern im Backvorbereitungsprozeß wie z. B. Kocher und Fettbackgeräte mit Betriebstemperaturen von 200 °C bis 250 °C.

Im vorliegenden Beispielsfalle sind die Wärmetauscher 7 und 10 als Plattenwärmetauscher ausgebildet und werden als Kompakteinheit mit zwei hintereinander geschalteten separat mit Wärmeträgermedium befüllbaren Wärmetauschern gebildet, um eine effektive Endverbraucher-orientierte Wärmebereitstellung über den Wärmeträger zu sichern.

Die abgekühlten Rauchgase verlassen über Rohrleitung 12 den zweiten Wärmetauscher 10 und werden in einen Festbettadsorber 13 eingeleitet, der mit einer körnigen Kalk/Kohle-Schüttung mit Korngrößen von ca. 5 bis 10 mm gefüllt ist. Der Kohleanteil beträgt ca. 10%. In dem Adsorber 13 werden die sauren Bestandteile, die mit dem Rauchgasstrom eingetragen werden am Kalk gebunden und die nicht an Kalk bindbaren Gasbestandteile werden aufgrund der adsorptiven Wirkung der Kohle an deren Oberfläche adsorbiert. Ein derartiger Adsorber 13 hat im Beispielsfalle ein Volumen von ca. 45 l und hat Standzeiten von über einem Betriebsjahr. Erschöpfte Adsorberfüllungen können problemlos in Müllverbrennungsanlagen entsorgt werden.

Die nunmehr abgekühlten und gereinigten Rauchgase verlassen den Adsorber 13 über Rohrleitung 14 und gelangen über Sauggebläse 4 und schlußendlich über den Kamin 15 als gereinigte Abluft in die Atmosphäre. Es ist offensichtlich, daß mit der erfindungsgemäßen Vorrichtung die Notwendigkeit des Baus von Kaminen entfällt, da das Rauchgas sowohl gereinigt als auch abgekühlt wird.

Mit dem erfindungsgemäßen Verfahren sowie der erfindungsgemäßen Vorrichtung ist eine deutliche Absenkung des Abgasverlustwertes weit unterhalb der gesetzlich festgeschriebenen Grenzwerte realisierbar, wobei die gewonnene Abwärme effektiv mit der Zuführung in den Backvorbereitungsprozeß verwertet und genutzt wird. Der Wirkungsgrad wird durch die Abgastemperatur bestimmt und liegt bei ca. 85% bzw. einer nutzbaren Wärmemenge von rund 7 kW.

Die Leistungsaufnahme der Einzelverbraucher, insbesondere die Umwälzpumpen, das Sauggebläse, sowie das Steuerungssystem liegt bei maximal ca. 1,3 kW.

Das ganze Verfahren wird regelungstechnisch gesteuert und läuft im wesentlichen ohne manuelle Eingriffe ab. Die vorliegende Erfindung ist nicht nur für Bäckereibetriebe interessant sondern ebenfalls für Fleischereien, Räuchereibetriebe, sowie Heizungsanlagen für Wohn- und Geschäftshäuser mit einer Nennleistung der Feuerungsanlage von >50 kW.

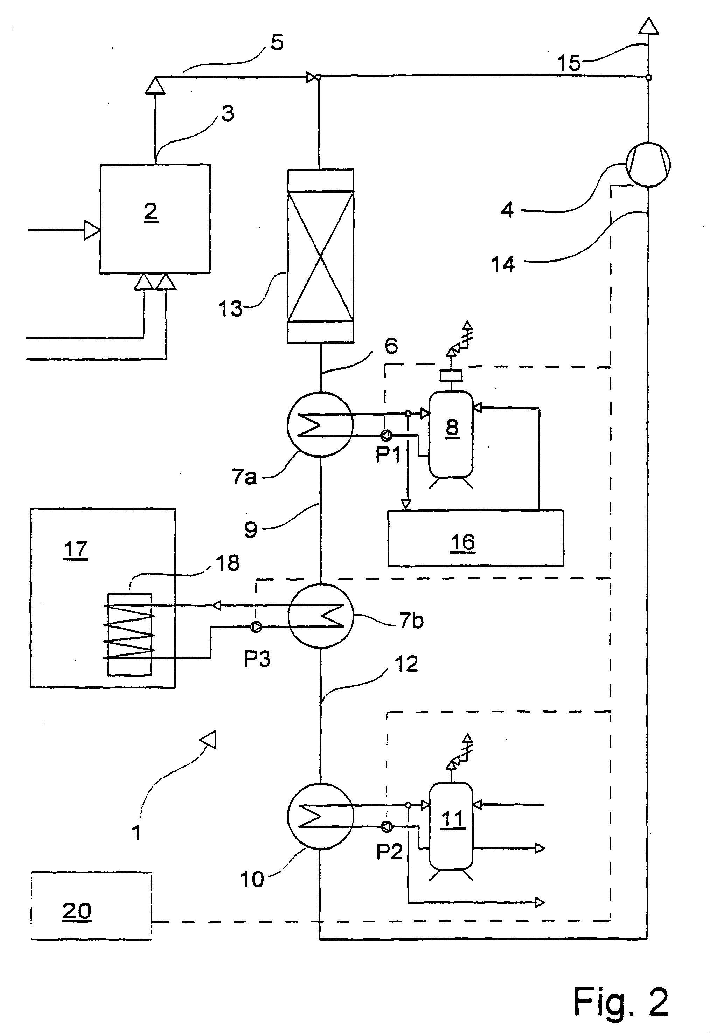

Die in Figur 2 gezeigte Vorrichtung stellt eine bevorzugte Ausführungsform der erfindungsgemäßen Vorrichtung dar. Als Kleinfeuerungsanlage sind hier mehrere Bäckereiöfen zusammengefaßt und mit der Ziffer 2 bezeichnet. Die mittlere Termperatur am Ausgang aus den Öfen 2 beträgt in diesem Fall etwa 220 °C bis 250 °C, je nach Backgut. Der Abzug der Rauchgase aus dem Ofen erfolgt wie oben beschrieben über ein Saug-Zug-Gebläse 4.

Über die Leitung 5 werden die Rauchgase zunächst einem Festbettadsorber 13 mit einer Schüttung auf Silikagelbasis zugeführt, um saure und andere schädliche Bestandteile zu binden.

Über Leitung 6 gelangen die bereits gereinigten Rauchgase in einen ersten Hochtemperaturwärmetauscher 7a, der mit einem Boiler 8 verbunden ist. An den ersten, mit Thermoöl als Hochtemperatur-Wärmeträger betriebenen Wärmetauscher 7a ist über einen Boiler 8 ein Thermoöl-Ofen 16 als Endverbraucher angeschlossen. Eine Steuerung 20 sorgt dafür, daß bei Betrieb des Thermoöl-Ofens 16 diesem eine ausreichende Energiemenge des Rauchgases zur Verfügung steht. Die Vorlauftemperatur für den Thermoöl-Ofen liegt im allgemeinen im Bereich von 140 bis 160 °C, so daß die Rauchgase in diesem Fall durch den ersten Wärmetauscher 7a auf Temperaturen von ca. 160 bis 180 °C abgekühlt werden.

Der in Prozeßrichtung zweite, mit Thermoöl oder alternativ auch Wasser oder Wasserdampf unter Druck als Hochtemperatur-Wärmeträger betriebene Wärmetauscher 7b dient dem Betrieb eine Absorptionskälteanlage 17. Dazu steht der als Ringkanalwärmetauscher ausgebildete Wärmetauscher 7b direkt mit dem Desorberbehälter 18 der Absorptionskälteanlage 17 in Verbindung. In dieser Kälteanlage 17 wird die aus dem Rauchgas gewonnene Abwärme zur Desorption des in dem Absorptionsmittel enthaltenen Kältemittels genutzt. Das Kältemittel entzieht dann nach der Kondensation dem Rezipienten Wärme. Die Kühlleistung kann zur Bereitung von Eiswasser, zur Klimatisierung oder zum Frosten verwendet werden.

Sollte die im Wärmetauscher 7b rückgewonnene Abwärme zum Betrieb nicht ausreichen, kann mit einem Gasbrenner (nicht dargestellt) der Kälteanlage 17 zugeheizt werden. Zur Ermöglichung dieser parallelen Beheizung wird im Beispielsfalle der herkömmliche rohrförmige und von außen gasbeheizbare Desorberbehälter 18 der Kälteanlage 17 über spiralförmig herumgewickelte Rohre mit dem Hochtemperatur-Wärmeträger des Wärmetauschers 7b beheizt.

Der in Prozeßrichtung dritte, mit Wasser als Niedertemperatur-Wärmeträger betriebene Wärmetauscher 10 ist mit einem Boiler 11 verbunden. Die hier gewonnene Abwärme kann vorteilhaft zur Beheizung von Auftauräumen sowie zur Heißwasserbereitung benutzt werden.

Eine nur schematisch angedeutete Steuerung 20 ist mit den Pumpen P1, P2 und P3 der Wärmetauscher 7a, 7b und 10 und mit dem Sauggebläse 4 verbunden. Die Steuerung 20 regelt die Saugleistung des Sauggebläses 4, so daß ein geeigneter Unterdruck am Ofenausgang aufrechterhalten wird. Weiterhin wird die Pumpleistung der Pumpen P1, P2 und P3 entsprechend dem Wärmebedarf der angeschlossenen Verbraucher, wobei auch einem der Verbraucher der Vorrang eingeräumt werden kann, geregelt. Es ist möglich, daß die Steuerung mit Überwachungssensoren verbunden wird, die beispielsweise einen verbrauchten Adsorber oder zu hohe Temperaturen am Austritt des dritten Wärmetauschers 10 anzeigen. Die hierfür einzusetzende Meß- und Regelungstechnik ist dem Fachmann bekannt und soll hier nicht näher beschrieben werden.

## Patentansprüche

1. Verfahren zur Abwärmenutzung bei Kleinfeuerungsanlagen, insbesondere solchen für Backöfen, bei dem
die einen Brennerraum der Kleinfeuerunganlage (2) verlassenden Rauchgase mindestens einem mit einem Hochtemperatur-Wärmeträgermedium gefüllten ersten Wärmetauscher (7) zugeführt werden und hierdurch auf eine erste Temperatur vorgekühlt werden;
die vorgekühlten Rauchgase mindestens einem mit einem Niedertemperatur-Wärmeträgermedium gefüllten zweiten Wärmetauscher (10) zugeführt werden und hierdurch auf eine zweite Temperatur abgekühlt werden;
das mit einem Teil der Rauchgasenergie beladene Hochtemperatur-Wärmeträgermedium und das mit einem weiteren Teil der Rauchgasenergie beladene Niedertemperatur-Wärmeträgermedium zur endverbraucherorientierten Benutzung verwendet wird,
**dadurch gekennzeichnet,**
**daß** das Hoch- oder das Niedertemperatur-Wärmeträgermedium zum Betrieb einer Absorptionskälteanlage (17) eingesetzt wird.

2. Verfahren nach Anspruch 1, **dadurch gekennzeichnet, daß** ein Desorber (18) der Absorptionskälteanlage (17) so ausgebildet ist, daß der Desorber (18) gleichzeitig mit dem Wärmeträgermedium und einer integrierten Heizung der Absorptionskälteanlage (17) beheizt werden kann.

3. Verfahren nach Anspruch 1 oder 2, **dadurch gekennzeichnet, daß** die erste und die zweite Temperatur an eine von einem Verbraucher benötigte Temperatur anpaßbar sind.

4. Verfahren nach einemd er Ansprüche 1 bis 3, **dadurch gekennzeichnet, daß** die in dem ersten und zweiten Wärmetauscher (7, 10) auf die Wärmeträgermedien übertragenen Teile der Rauchgasenergie entsprechend den Lastverhältnissen von angeschlossenen Verbrauchern auf die Wärmeträgermedien verteilbar sind.

5. Verfahren nach einem der Ansprüche 1 bis 4, **dadurch gekennzeichnet, daß** die zweite Temperatur im Bereich von 30 bis 70 °C oder oberhalb des Taupunktes der Rauchgase liegt.

6. Verfahren nach einem der Ansprüche 1 bis 5, **dadurch gekennzeichnet, daß** die mit Abwärme aus den Rauchgasen beladenen Wärmeträgermedien in jeweils wenigstens einem Vorratsbehälter, insbesondere Boiler (8, 11) mit Wärmedämmung, gespeichert werden, bis sie ihrer Verwendung zugeführt werden.

7. Verfahren nach einem der Ansprüche 1 bis 6, **dadurch gekennzeichnet, daß** das mit einem Teil der Abwärme aus den Rauchgasen beladene Hochtemperatur-Wärmeträgermedium zur Erwärmung von Materialien oberhalb des Siedepunktes von Wasser, insbesondere zu Backvorbereitungsprozessen und/oder zum Betrieb von Kochern, Fettbackgeräten, Thermoöl-Öfen usw., verwendet wird.

8. Verfahren nach einem der Ansprüche 1 bis 7, **dadurch gekennzeichnet, daß** das mit einem Teil der Abwärme aus den Rauchgasen beladene Niedertemperatur-Wärmeträgermedium verwendet wird, um Heißwasser, vorzugsweise mit einer Vorlauftemperatur von ca. 90 °C, für Niedertemperaturprozesse zu erzeugen.

9. Verfahren nach einem der Ansprüche 1 bis 8, **dadurch gekennzeichnet, daß** die Rauchgase bzw. Abgase am Ausgang (3) der Kleinfeuerungsanlage (2) druckgeregelt abgezogen werden.

10. Verfahren nach Anspruch 9, **dadurch gekennzeichnet, daß** am Ausgang (3) der Kleinfeuerungsanlage (2) ein Unterdruck angelegt wird, der in etwa demjenigen des Kaminzuges entspricht, vorzugsweise bis zu ca. 0,4 mbar.

11. Verfahren nach einem der Ansprüche 1 bis 10, **dadurch gekennzeichnet, daß** der Brenner mit Öl oder Gas betrieben wird.

12. Verfahren nach einem der Ansprüche 1 bis 11, **dadurch gekennzeichnet, daß** die gegebenenfalls über beide Wärmetauscher (7, 10) gekühlten Rauchgase einem Trockenadsorber (13) zugeführt werden, wobei schädliche Anteile, insbesondere die sauren Bestandteile CO₂, NOₓ und SO₂, aus dem Rauchgas entfernt werden.

13. Vorrichtung zur Durchführung eines Verfahrens gemäß einem der Ansprüche 1 bis 12, mit:
einem Sauggebläse (4), welches mit dem Ausgang (3) des Brennerraumes einer Kleinfeuerungsanlage (2) zum Abführen der Rauchgase über eine Rohrleitung (5, 6, 9, 12, 14) verbunden ist,
wenigstens einem ersten Wärmetauscher (7), der mit einem Hochtemperatur-Wärmeträger gefüllt ist und der mit den Rauchgasen in Kontakt tritt und diese dadurch auf eine erste Temperatur vorkühlt;
wenigstens einem zweiten Wärmetauscher (10), der mit einem Niedertemperatur-Wärmeträger gefüllt ist und der mit den vorgekühlten Rauchgasen in Kontakt tritt und diese dadurch auf eine zweite Temperatur weiter abkühlt,
**gekennzeichnet durch**
eine Absorptionskälteanlage (17), die mit dem ersten Wärmetauscher (7) oder dem zweiten Wärmetauscher (10) oder einem zusätzlichen in Prozeßrichtung zwischen dem erstem Wärmetauscher (7) und dem zweitem Wärmetauscher (10) angeordneten Wärmetauscher (7b) zur Beheizung verbunden ist.

14. Vorrichtung nach einem der Ansprüche 13 bis 21, **dadurch gekennzeichnet, daß** ein Desorber (18) der Absorptionskälteanlage (17) so ausgebildet ist, daß der Desorber (18) gleichzeitig mit dem Wärmeträgermedium und einer integrierten Heizung beheizbar ist.

15. Vorrichtung nach Anspruch 13, **dadurch gekennzeichet,** daß der zusätzliche in Prozeßrichtung zwischen dem erstem Wärmetauscher (7) und dem zweitem Wärmetauscher (10) angeordnete Wärmetauscher (7b) mit einem Hochtemperatur-Wärmeträgermedium gefüllt ist.

16. Vorrichtung nach Anspruch 13 oder 14, **dadurch gekennzeichnet, daß** der erste und/oder der zweite Wärmetauscher (7, 10) als Plattenwärmetauscher ausgebildet ist.

17. Vorrichtung nach Anspruch 15, **dadurch gekennzeichnet, daß** der erste oder der zweite Wärmetauscher als Ringkanalwärmetauscher ausgebildet ist.

18. Vorrichtung nach einem der Ansprüche 13 bis 16, **dadurch gekennzeichnet, daß** für die mit Wärmeenergie beladenen Hochtemperatur- und Niedertemperatur-Wärmetragermedien wärmegedämmte Vorratsbehälter, insbesondere Boiler (8, 11), vorgesehen sind.

19. Vorrichtung nach einem der Ansprüche 13 bis 17, **dadurch gekennzeichnet, daß** der erste Wärmetauscher (7) mit einem Wärmeträgeröl, insbesondere einem wasserstoffbehandelten Mineralöl mit Additiven des Typs Calfo-FG, das für einen unbeabsichtigten Kontakt mit Lebensmitteln zugelassen ist, gefüllt ist, und daß der zweite Wärmetauscher (10) mit Wasser gefüllt ist.

20. Vorrichtung nach einem der Ansprüche 13 bis 18, **dadurch gekennzeichnet, daß** vor dem Kamin (15) der Kleinfeuerungsanlage (2) eine Rauchgasreinigungseinrichtung, insbesondere ein Trocken-, vorzugsweise ein Festbettadsorber (13) vorgesehen ist.

21. Vorrichtung nach Anspruch 19, **dadurch gekennzeichnet, daß** der Festbettadsorber (13) mit einer Kalk/Kohle-Schüttung mit Korngrößen von ca. 5 bis 10 mm beschickt ist, wobei der Kohleanteil ca. 5 bis 30%, vorzugsweise ca. 10%, beträgt.

22. Vorrichtung nach Anspruch 19, **dadurch gekennzeichnet, daß** der Festbettadsorber (13) mit einer Schüttung auf Silikagel-Basis beschickt ist.

## Claims

1. Method of using waste heat in small heating systems, in particular those for ovens, wherein
the flue gases leaving a burner chamber of the small heating system are fed to at least one first heat exchanger (7) filled with a high temperature heat exchange medium and are hereby pre-cooled to a first temperature;
the pre-cooled flue gases are fed to at least one second heat exchanger (10) filled with a low temperature heat exchange medium and are hereby cooled to a second temperature;
the high temperature heat exchange medium loaded with a part of the flue gas energy and the low temperature heat exchange medium loaded with a further part of the flue gas energy are used for an end user oriented application,
**characterised in that**
the high or the low temperature heat exchange medium is used for the operation of an absorption refrigeration system (17).

2. Method according to Claim 1 **characterised in that** a desorber (18) of the absorption refrigeration system (17) is formed in such a way that the desorber (18) can at the same time be heated with the heat exchange medium and an integrated heater of the absorption refrigeration system (17).

3. Method according to Claim 1 or 2 **characterised in that** the first and the second temperature can be adapted to a temperature required by a consumer.

4. Method according to one of the Claims 1 to 3 **characterised in that** the parts of the flue gas energy transferred to the heat exchange media in the first and second heat exchanger (7, 10) can be distributed to the heat exchange media according to the load conditions of connected consumers.

5. Method according to one of the Claims 1 to 4 **characterised in that** the second temperature lies in the region of 30 to 70°C or above the dew point of the flue gases.

6. Method according to one of the Claims 1 to 5 **characterised in that** the heat exchange media loaded with waste heat from the flue gases are each stored in a storage container, in particular in a boiler (8, 11) with heat insulation, until they are fed to their application.

7. Method according to one of the Claims 1 to 6 **characterised in that** the high temperature heat exchange medium loaded with a part of the waste heat from the flue gases is used for heating materials above the boiling point of water, in particular for baking preparation processes and/or for the operation of cookers, deep fat fryers, thermal oil ovens, etc.

8. Method according to one of the Claims 1 to 7 **characterised in that** the low temperature heat exchange medium loaded with a part of the waste heat from the flue gases is used in order to produce hot water, preferably with a flow temperature of approximately 90°C for low temperature processes.

9. Method according to one of the Claims 1 to 8 **characterised in that** the flue gases or waste gases are drawn off in a pressure controlled way at the outlet (3) of the small heating system (2).

10. Method according to Claim 9 **characterised in that** at the outlet (3) of the small heating system (2) an underpressure is applied, which corresponds approximately to that of the chimney draft, preferably up to approximately 0.4 mbar.

11. Method according to one of the Claims 1 to 10 **characterised in that** the burner is operated with oil or gas.

12. Method according to one of the Claims 1 to 11 **characterised in that** the flue gases cooled, if applicable, by means of both heat exchangers (7, 10) are fed to a dry adsorber, wherein harmful components, in particular the acid components CO₂, NOₓ and SO₂, are removed from the flue gas.

13. Device for implementing a method according to one of the Claims 1 to 12, with:
an exhaust fan (4) which is connected to the outlet (3) of the burner chamber of a small heating system (2) for removing the flue gases by means of a pipe (5, 6, 9, 12, 14),
at least one first heat exchanger (7) which is filled with a high temperature heat exchange medium and which comes into contact with the flue gases and thereby pre-cools the latter to a first temperature,
at least one second heat exchanger (10) which is filled with a low temperature heat exchange medium and which comes into contact with the pre-cooled flue gases and thereby further cools the latter to a second temperature,
**characterised by**
an adsorption refrigeration system (17) which is connected with the first heat exchanger (7) or the second heat exchanger (10) or an additional heat exchanger (7b) arranged in the process direction between the first heat exchanger (7) and the second heat exchanger (10) for the purpose of heating.

14. Device according to one of the Claims 13 to 21 **characterised in that** a desorber (18) of the adsorption refrigeration system (17) is formed in such a way that the desorber (18) can be heated at the same time with the heat exchange medium and an integrated heater.

15. Device according to Claim 13 **characterised in that** the additional heat exchanger (7b) arranged in the process direction between the first heat exchanger (7) and the second heat exchanger (10) is filled with a high temperature heat exchange medium.

16. Device according to Claim 13 or 14 **characterised in that** the first and/or the second heat exchanger (7, 10) is formed as a plate heat exchanger.

17. Device according to Claim 15 **characterised in that** the first or the second heat exchanger is formed as an annular channel heat exchanger.

18. Device according to one of the Claims 13 to 16 **characterised in that** storage containers insulated against heat, in particular boilers (8, 11), are provided for the high temperature and low temperature heat exchange media loaded with thermal energy.

19. Device according to one of the Claims 13 to 17 **characterised in that** the first heat exchanger (7) is filled with a heat exchange oil, in particular a hydrogen treated mineral oil with additives of the type Calfo-FG, which is permitted for unintentional contact with foodstuffs, and that the second heat exchanger (10) is filled with water.

20. Device according to one of the Claims 13 to 18 **characterised in that** a flue gas purification installation, in particular a dry adsorber, preferably a fixed bed adsorber, is provided before the chimney flue (15) of the small heating system (2).

21. Device according to Claim 19 **characterised in that** the fixed bed adsorber (13) is fired with a lime/coal material with particle sizes of approximately 5 to 10 mm, wherein the proportion of coal is approximately 5 to 30%, preferably approximately 10%.

22. Device according to Claim 19 **characterised in that** the fixed bed adsorber (13) is fired with a material based on a silica gel.

## Revendications

1. Procédé pour utiliser la chaleur perdue dans de petites installations de chauffe, notamment dans de telles installations pour des fours de cuisson, selon lequel
les gaz de fumées, qui quittent la chambre de combustion de la petite installation de chauffe (2), sont envoyés au moins à un premier échangeur de chaleur (7), qui est rempli par un fluide caloporteur à haute température, et sont de ce fait, prérefroidis à une première température;
les gaz de fumée prérefroidis sont envoyés au moins à un second échangeur de chaleur (10), qui est rempli d'un fluide caloporteur à basse température, et sont refroidis de ce fait à une seconde température;
le fluide caloporteur à haute température, qui est chargé par une partie de l'énergie des gaz de fumée et le fluide caloporteur à basse température, qui est chargé par une autre partie de l'énergie des gaz de fumée, sont utilisés pour une utilisation axée sur l'appareil d'utilisation final,
**caractérisé en ce**
**que** le fluide caloporteur à haute température et le fluide caloporteur à basse température sont utilisés pour faire fonctionner une installation (17) produisant du froid par absorption.

2. Procédé selon la revendication 1, **caractérisé en ce qu'**un désorbeur (18) de l'installation (17) de production de froid par absorption est agencé de telle sorte que le désorbeur (18) peut être chauffé simultanément avec le fluide caloporteur et avec un chauffage intégré de l'installation (17) de production de froid par absorption.

3. Procédé selon la revendication 1 ou 2, **caractérisé en ce que** les première et seconde températures peuvent être adaptées à une température requise par un appareil d'utilisation.

4. Procédé selon l'une des revendications 1 à 3, **caractérisé en ce que** les parties de l'énergie des gaz de fumée, qui sont transmises aux fluides caloporteurs dans les premier et second échangeurs de chaleur (7, 10), peuvent être réparties, entre les fluides caloporteurs en fonction des conditions de charge des appareils d'utilisation raccordés.

5. Procédé selon l'une des revendications 1 à 4, **caractérisé en ce que** la seconde température se situe dans la gamme de 30 à 70°C ou au-dessus du point de rosée des gaz de fumée.

6. Procédé selon l'une des revendications 1 à 5, **caractérisé en ce que** les fluides caloporteurs chargés par la chaleur perdue provenant des gaz de fumée, sont stockés dans respectivement au moins un réservoir de stockage, notamment un chauffe-eau (8, 11) moyennant un système de calorifugeage, jusqu'à ce qu'ils soient délivrés pour leur utilisation.

7. Procédé selon l'une des revendications 1 à 6, **caractérisé en ce que** le fluide caloporteur à haute température, qui est chargé avec une partie de la chaleur perdue provenant des gaz de fumées, est utilisé pour chauffer des matériaux au-dessus du point d'ébullition de l'eau, notamment pour des processus de prétraitement de cuisson et/ou pour le fonctionnement de bouilloires, d'appareils de cuisson à la graisse, de fours à huile thermique, etc.

8. Procédé selon l'une des revendications 1 à 7, **caractérisé en ce que** le fluide caloporteur à basse température, qui est chargé par une partie de la chaleur perdue provenant des gaz de fumées, est utilisé pour obtenir de l'eau chaude, de préférence avec une température du circuit aller d'environ 90°C, pour des processus à basse température.

9. Procédé selon l'une des revendications 1 à 8, **caractérisé en ce que** les gaz de fumée ou les gaz d'échappement sont soutirés, en étant réglés en pression, de la sortie (3) de la petite installation de chauffe (2).

10. Procédé selon la revendication 9, **caractérisé en ce qu'**à la sortie (3) de la petite installation de chauffe (2) est appliqué une dépression, qui correspond approximativement à celle du tirage de la cheminée, de préférence jusqu'à environ 0,4 mbar.

11. Procédé selon les revendications 1 à 10, **caractérisé en ce que** le brûleur fonctionne avec du mazout ou du gaz.

12. Procédé selon l'une des revendications 1 à 11, **caractérisé en ce que** les gaz de fumée éventuellement refroidis au moyen des deux échangeurs de chaleur (7, 10) sont envoyés à un dispositif d'adsorption à sec (13), des composantes nocives, notamment les composantes acides (CO₂, NOₓ et SO₂), étant éliminées des gaz de fumées.

13. Dispositif pour la mise en oeuvre du procédé selon l'une des revendications 1 à 12, comprenant:
un ventilateur aspirant (4), qui est relié à la sortie (3) de la chambre de combustion d'une petite installation de chauffe (1) pour évacuer les gaz de fumées par l'intermédiaire d'une conduite tubulaire (5, 6, 9, 12,14),
au moins un premier échangeur de chaleur (7), qui est rempli d'un fluide caloporteur à haute température et qui vient en contact avec les gaz de fumée et prérefroidit de ce fait, ces derniers à une première température;
au moins un second échangeur de chaleur (10), qui est rempli par un fluide caloporteur à basse température et qui est en contact avec les gaz de fumées prérefroidis et de ce fait, refroidit ces gaz de façon supplémentaire à une seconde température,
**caractérisé par**
une installation (17) de production de froid par absorption, qui est reliée au premier échangeur de chaleur (7) ou au second échangeur de chaleur (10) ou à un échangeur de chaleur (7b) pour le chauffage, qui est disposé dans la direction du processus entre le premier échangeur de chaleur (7) et le second échangeur de chaleur (10).

14. Dispositif selon la revendication 13, **caractérisé en ce qu'**un désorbeur (18) de l'installation (17) de production de froid par absorption est agencé de telle sorte que le désorbeur (18) peut être chauffé simultanément avec le fluide caloporteur et un dispositif de chauffage intégré.

15. Dispositif selon la revendication 13, **caractérisé en ce que** l'échangeur de chaleur supplémentaire (7b), qui est disposé dans la direction du processus entre le premier échangeur de chaleur (7) et le second échangeur de chaleur (10), est rempli d'un fluide caloporteur à haute température.

16. Dispositif selon la revendication 13 ou 14, **caractérisé en ce que** le premier et/ou le second échangeurs de chaleur (7, 10) sont agencés sous la forme d'un échangeur de chaleur à plaques.

17. Dispositif selon la revendication 15, **caractérisé en ce que** le premier ou le second échangeur de chaleur est agencé sous la forme d'un échangeur de chaleur à canal annulaire.

18. Dispositif selon l'une des revendications 13 à 16, **caractérisé en ce que** pour des réservoirs calorifugés, notamment des chauffe-eau (8, 11), sont prévus pour les fluides caloporteurs à haute température et basse température chargés d'une énergie thermique.

19. Dispositif selon l'une des revendications 13 à 17, **caractérisé en ce que** le premier échangeur de chaleur (7) est rempli par un fluide caloporteur formé d'huile, notamment une huile minérale traitée à l'hydrogène et contenant des additifs du type Calfo-FG, qui est autorisé pour un contact non intentionnel avec des denrées alimentaires, et que le second échangeur de chaleur (10) est rempli d'eau

20. Dispositif selon l'une des revendications 13 à 18, **caractérisé en ce que** un dispositif d'épuration des gaz de fumées, notamment un dispositif d'adsorption à sec, de préférence un dispositif d'adsorption à lit solide (13) est prévu en amont de la cheminée (15) de la petite installation de chauffe (2).

21. Dispositif selon la revendication 19, **caractérisé en ce que** le dispositif d'adsorption à lit solide (13) est chargé par un remplissage en vrac de chaux/charbon avec une granulométrie comprise entre environ 5 et 10 mm, le pourcentage de charbon étant compris entre environ 5 et 30 % et étant égal de préférence à environ 10 %.

22. Dispositif selon la revendication 19, **caractérisé en ce que** l'adsorbeur à lit solide (13) est chargé par un matériau en vrac à base de gel de silice.
